# EUROPEAN PATENT APPLICATION

(11) **EP 3 595 254 A1**
(43) Date of publication of application: **15.01.2020**
(21) Application number: 17899308.5
(22) Date of filing: 15.12.2017
(51) Int. Cl.: H04L 29/06

(54) **MULTICAST SIGNAL TRANSMISSION/RECEPTION METHOD AND DEVICE**

(30) Priority: 10.03.2017 US 201762470160 P; 05.11.2017 US 201762581756 P
(71) Applicant: LG Electronics Inc., Seoul 07336 (KR)
(72) Inventor: KWON, Woosuk, Seoul 06772 (KR); PARK, Jonghwan, Seoul 06772 (KR); YOON, Joonhee, Seoul 06772 (KR)
(74) Representative: Mooser, Sebastian Thomas
(86) International application number: PCT/KR2017/014839
(87) International publication number: WO 2018/164355

(57) **Abstract**

The present invention relates to a device and method for multicast transmission of content data. A multicast transmission method according to an embodiment of the present invention comprises the steps of: receiving a media content; packetizing the received media content by using a multicast delivery protocol; encapsulating the packetized media content into an intermediate delivery protocol (IDP) packet; and transmitting the IDP packet.

## Description

### [Technical Field]

The present invention relates to an apparatus and method for transmitting and receiving multicast signals.

### [Background Art]

With the development of digital technology and communication technology, distribution and demand of audio/video-oriented multimedia contents are rapidly expanding in various areas such as broadcasting, movies, Internet and personal media. In addition, as the size of TV screens at home increases with the development of display technology, ultra high definition (UHD) broadcasting services are increasingly discussed.

Regarding a broadcast service, a multicast transmission scheme for transmitting the same content to a plurality of users is effective because it may take advantage of both unicast and broadcast. However, the conventional multicast transmission scheme is available within a single network, and cannot support a multicast service between heterogeneous networks. As a result, when a multicast reception apparatus establishes and releases connection to different access networks, a new multicast service is required to start after the existing multicast service is terminated. In addition, when a plurality of delivery protocols are used, a protocol constituting payload on IP/UDP or IP/TCP cannot be identified with a port number if it is not registered in IANA. In the case of IP multicast, valued assigned to multicast are used as the destination address and port number, and thus all receivers receive the corresponding packet. If an unknown protocol is used at this time, multicast of the packet may not be processed.

### [Disclosure]

### [Technical Problem]

An object of the present invention is to provide a multicast signal transmission method and apparatus which are capable of improving transmission efficiency.

Another object of the present invention is to provide a transmission apparatus and method for providing a multicast service over a broadcast network.

Another object of the present invention is to provide an apparatus and method for receiving content data from one multicast server over a plurality of access networks.

Another object of the present invention is to identify a protocol when a plurality of delivery protocols is used in a session layer.

Another object of the present invention is to transmit a packet in a predetermined format for a multicast streaming service by using a common packet.

Another object of the present invention is to simplify a signaling acquisition process carried out for the receiver to identify the protocol.

### [Technical Solution]

In one aspect of the present invention, provided herein is a multicast transmission method including receiving media content, packetizing the received media content using a multicast delivery protocol, encapsulating the packetized media content into an intermediate delivery protocol (IDP) packet, and transmitting the IDP packet.

The multicast delivery protocol may be one of File Delivery over Unidirectional Transport (FLUTE), Real-Time Object Delivery over Unidirectional Transport (ROUTE), NACK-Oriented Reliable Multicast (NORM), Quick UDP Internet Connections (QUIC), Real Time Protocol (RTP) or Common Mezzanine Distribution Format (CMZF).

The IDP packet may include a header and a payload, wherein the header of the IDP packet may contain information for identifying the multicast delivery protocol.

The IDP packet may include a header and a payload, wherein the header of the IDP packet may contain information for identifying a type of a data stream included in the payload of the IDP packet.

The information for identifying the type of the data stream may indicate one of streaming, repair, control message, signaling, or report.

The IDP packet may include a header and a payload, wherein the header of the IDP packet may contain link information, wherein the link information may indicate whether a link used to transmit the IDP packet is a multicast link, a tunneling link, or a signaling link.

In another aspect of the present invention, provided herein is a multicast transmission apparatus including a receiver configured to receive media content, a packetizer configured to packetize the received media content using a multicast delivery protocol, an intermediate delivery protocol (IDP) processor configured to encapsulate the packetized media content into an IDP packet, and a transmitter configured to transmit the IDP packet.

The multicast delivery protocol may be one of File Delivery over Unidirectional Transport (FLUTE), Real-Time Object Delivery over Unidirectional Transport (ROUTE), NACK-Oriented Reliable Multicast (NORM), Quick UDP Internet Connections (QUIC), Real Time Protocol (RTP) or Common Mezzanine Distribution Format (CMZF).

The IDP packet may include a header and a payload, wherein the header of the IDP packet may contain information for identifying the multicast delivery protocol.

The IDP packet may include a header and a payload, wherein the header of the IDP packet may contain information for identifying a type of a data stream included in the payload of the IDP packet.

The information for identifying the type of the data stream may indicate one of streaming, repair, control message, signaling, or report.

The IDP packet may include a header and a payload, wherein the header of the IDP packet may contain link information, wherein the link information may indicate whether a link used to transmit the IDP packet is a multicast link, a tunneling link, or a signaling link.

In another aspect of the present invention, provided herein is a multicast reception method including receiving an intermediate delivery protocol (IDP) packet from a multicast sender, parsing the received IDP packet, the IDP packet including a multicast delivery protocol packet as a payload, and decoding media data contained in the IDP packet.

In another aspect of the present invention, provided herein is a multicast reception apparatus including a receiver configured to receive an intermediate delivery protocol (IDP) packet from a multicast sender, an IDP processor configured to parse the received IDP packet, the IDP packet including a multicast delivery protocol packet as a payload, and a decoder configured to decode media data contained in the IDP packet.

### [Advantageous Effects]

According to an embodiment of the present invention, transmission efficiency of a broadcast system may be enhanced.

According to an embodiment of the present invention, a multicast service may be provided between heterogeneous networks.

According to an embodiment of the present invention, reproduction for multicast service in a receiver may be started quickly.

According to an embodiment of the present invention, when a plurality of delivery protocols is used, a receiver may easily identify the delivery protocols.

### [Description of Drawings]

FIG. 1 is a diagram illustrating network architecture according to one embodiment of the present invention.
FIG. 2 is a diagram illustrating a content network according to an embodiment of the present invention.
FIG. 3 is a diagram illustrating a case where a content network according to an embodiment of the present invention includes a satellite relay.
FIG. 4 is a diagram illustrating a case where a content network according to an embodiment of the present invention includes a content delivery network (CDN).
FIG. 5 is a diagram illustrating a wired multicast network according to an embodiment of the present invention.
FIG. 6 is a diagram illustrating a mobile multicast network according to an embodiment of the present invention.
FIG. 7 is a diagram illustrating a user network according to an embodiment of the present invention.
FIG. 8 is a diagram illustrating network architecture for ABR multicast according to an embodiment of the present invention.
FIG. 9 is a diagram illustrating a protocol for an adaptive multicast stream according to an embodiment of the present invention.
FIG. 10 is a diagram illustrating a protocol for adaptive multicast streaming according to an embodiment of the present invention.
FIG. 11 is a diagram illustrating a protocol for signaling and control messages according to an embodiment of the present invention.
FIG. 12 is a diagram illustrating a protocol for signaling and control messages according to an embodiment of the present invention.
FIG. 13 is a diagram illustrating a protocol for transmitting media data over an IP network according to an embodiment of the present invention.
FIG. 14 is a diagram illustrating a media delivery protocol for IP multicasting according to an embodiment of the present invention.
FIG. 15 is a diagram illustrating a media delivery protocol for IP multicasting according to an embodiment of the present invention.
FIG. 16 is a diagram illustrating a media delivery protocol for IP multicasting according to an embodiment of the present invention.
FIG. 17 illustrates a protocol stack of Internet Protocol (IP) multicast according to an embodiment of the present invention.
FIG. 18 illustrates the architecture of a ROUTE protocol according to an embodiment of the present invention.
FIG. 19 illustrates a QUIC protocol according to an embodiment of the present invention.
FIG. 20 illustrates a multicast reception method through a plurality of protocols and a protocol stack according to an embodiment of the present invention.
FIG. 21 illustrates a multicast method and protocol stack using an intermediate delivery protocol according to an embodiment of the present invention.
FIG. 22 illustrates an intermediate delivery protocol (IDP) packet according to an embodiment of the present invention.
FIG. 23 is a diagram illustrating an Internet Protocol (IP) packet including an IDP packet according to an embodiment of the present invention.
FIG. 24 is a diagram illustrating a receiver structure according to an embodiment of the present invention.
FIG. 25 is a diagram illustrating a multicast sender and a multicast receiver according to an embodiment of the present invention.
FIG. 26 illustrates a multicast transmission method for a multicast sender according to an embodiment of the present invention.
FIG. 27 illustrates a multicast reception method for a multicast receiver according to an embodiment of the present invention.

### [Best Mode]

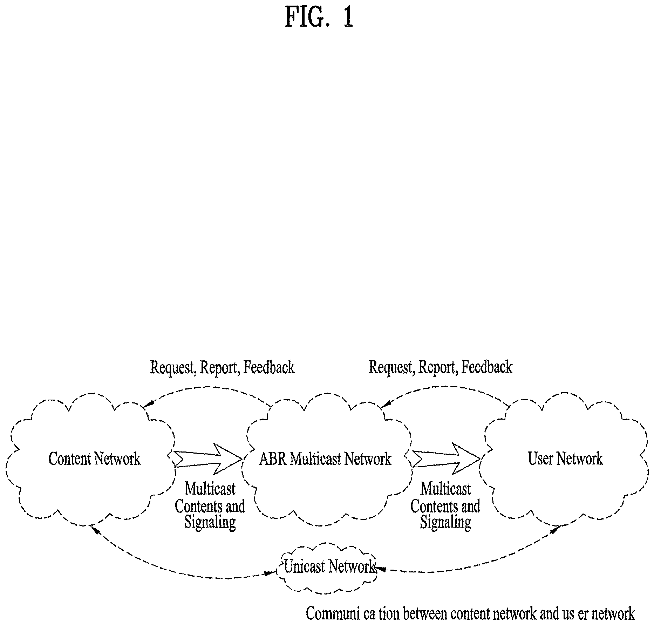

FIG. 1 is a diagram illustrating network architecture according to one embodiment of the present invention. As shown in FIG. 1, a network for adaptive media streaming may include a content network, an adaptive bit rate (ABR) multicast network, and a user network. This is a functional classification of networks used to support adaptive media streaming in an Internet Protocol (IP)-based multicast network. Each network may also connect to an additional network for supporting other functions than adaptive media streaming. For example, the content network and the user network may each connect to a unicast network for unicast services.

The user network may transmit a request, report, and feedback for content to be received to the ABR multicast network. The ABR multicast network may transmit a request, report, and feedback to the content network based on the information received from the user network. The content network may transmit multicast content and signaling information to the ABR multicast network based on the information received from the ABR multicast network. The ABR multicast network may transmit the received multicast content and signaling information to the user network to provide a multicast service.

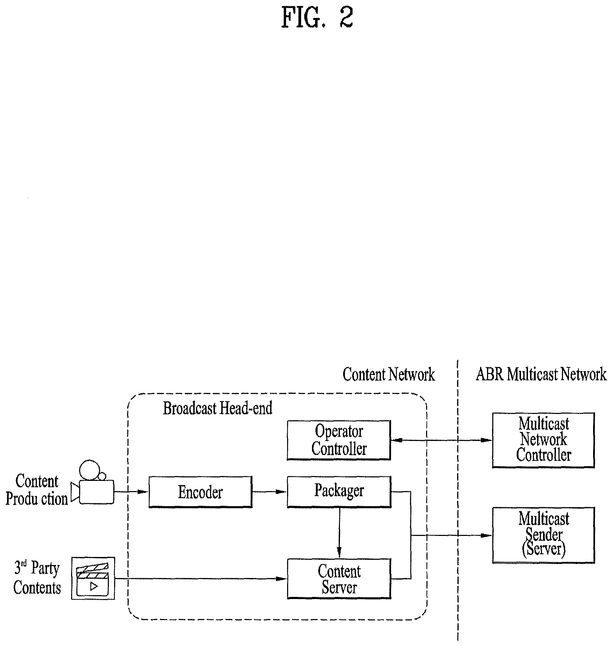

FIG. 2 is a diagram illustrating a content network according to an embodiment of the present invention. The content network may serve to generate, collect, and package content for adaptive multicast streaming, and may include various content sources. The content network may include a head-end of a broadcaster that provide terrestrial and cable broadcasting to provide broadcast content. The broadcaster head-end may include at least one of an encoder to encode content generated in content production, a packager to convert the encoded content, or a content server to store the content.

In addition, the content network may further include a satellite reception network to receive produced services from a geographically remote area. The content network may also include a content server to provide pre-stored content. The content network may include, besides the content server, a Content Delivery Network (CDN) to provide media transfer. Accordingly, the content network may generate and transmit a signaling message, a control message, and the like which are related to the content.

A separate signaling message or control message may be exchanged between several nodes belonging to the content network for proper interaction among the content, signaling message, control message, and the like, and these messages may not be delivered to other external networks. The signaling message or control message that is not transmitted to the external network may be referred to as internal network signaling.

As described above, the content network may include a broadcaster head-end. Content generated by the broadcaster may be subjected to encoding and packaging, and may then be delivered to a multicast transmitter so as to be multicast or be stored in the content server and delivered to the multicast transmitter when necessary. Components included in the broadcaster head-end of the content network are described below.

First, an encoder included in the broadcaster head-end encodes content. A packager included in the broadcaster head-end may convert the encoded content and data into a format suitable for multicast transmission. The format suitable for multicast transmission may be, for example, a media segment created by dividing one content item. In addition, when necessary, the packager may generate signaling that can be received by the receiver or a device belonging to a network. The media segment generated by the packager may be delivered directly to the multicast sender and multicast. However, in the case where the media segment is data that need not be delivered immediately, it may be stored in the content server. The content server included in the broadcaster head-end may store media data and related signaling. The content server may also store third party content generated by a third party and utilize the same for multicast if necessary. Here, the content stored in the content server may not require a separate encoding operation. Accordingly, the content server may store the media segments and the file formed by encoding or packaging the content, and may transmit the same when there is a transmission request. According to an embodiment, an encoding result of the media data may be stored in the content server, and a separate packaging operation may be required depending on the type of the transmission network. An operator controller included in the broadcaster head-end may manage content production, the content server, and the like, and manage and control a series of operations related to multicasting. The operator controller may collect control and signaling data for a plurality of devices and nodes in the content network and, if necessary, transmit the control and signaling data to the multicast network. Thereby, the operator controller may enable the multicast network to perform signaling and control related to multicast. In addition, the operator controller may receive and process unicast information transmitted from a decoding device or a player to use the same for multicast.

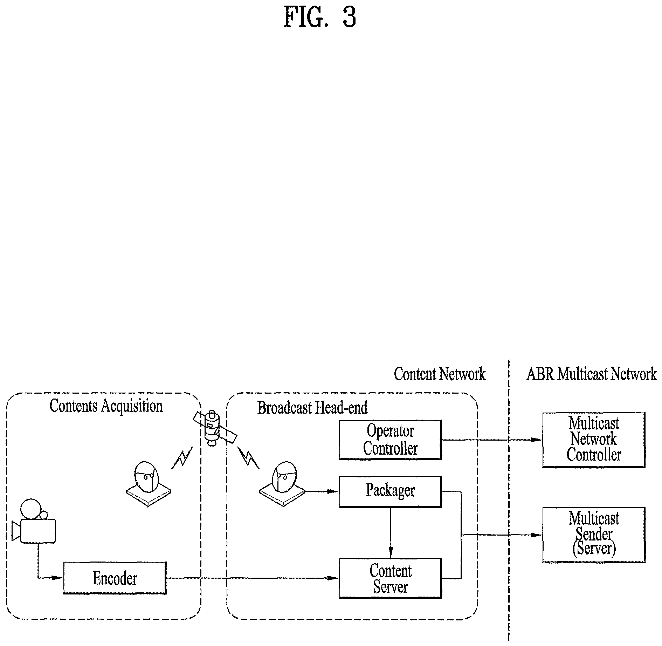

FIG. 3 is a diagram illustrating a case where a content network according to an embodiment of the present invention includes a satellite relay. The content network provided with a satellite relay may include an encoder, a satellite transmitter, a satellite receiver, a packager, a content server, and an operator controller. The head-end of a broadcaster providing terrestrial and cable broadcasting may include a satellite reception network for receiving services of geographically remote content producers. The satellite transmitting side may be the head-end of another broadcaster. In this case, a satellite transmission/reception network to which head-ends of a plurality of broadcasters are connected may be included in the content network. The content received via the satellite system may be subjected to encoding and packaging, and may then be delivered to the multicast sender so as to be multicast or be stored in the content server so as to be delivered to the multicast sender when necessary. The encoder of the content network in which the satellite relay is included may perform encode content. Here, the encoder may be connected to a satellite transmission device for relaying broadcast data to a satellite. The satellite relay system of the content network that includes the satellite relay may be used to provide live broadcasting for a geographically distant place. For example, overseas sports, concerts, news, and the like may be broadcast in real time through the satellite relay system. For this purpose, a separate satellite transmission related protocol and transmission scheme may be used. Data passed through the satellite transmission/reception system is delivered to the packager. The packager of the content network including the satellite relay is configured as illustrated in the previous drawing. The content server of the content network including the satellite relay may store media data and related signaling. In live broadcasting to a geographically distant place, the data passed through the packager may be transmitted directly to the multicast sender, but the data and related signaling may be stored in the head-end of the broadcaster for later use for the content. Detailed description thereof has been given with reference to the previous drawings. The description of the operator controller of the content network including the satellite relay has been given with reference to the previous drawings.

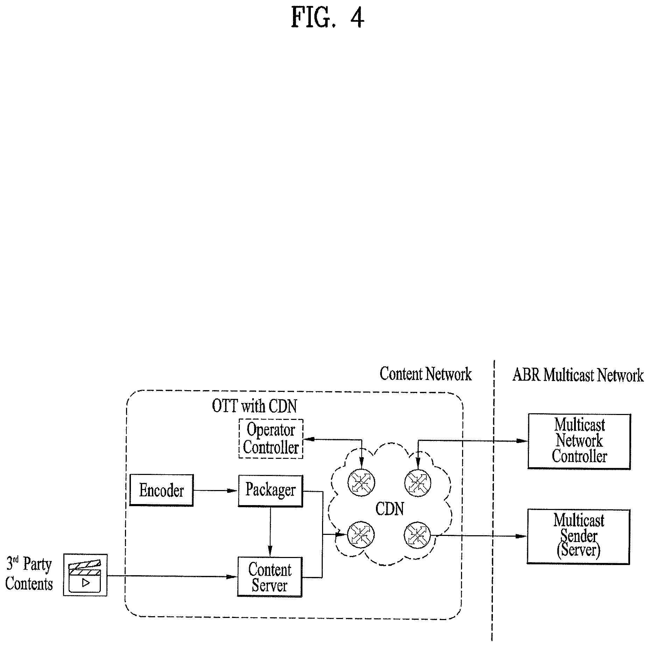

FIG. 4 is a diagram illustrating a case where a content network according to an embodiment of the present invention includes a content delivery network (CDN). Over the top (OTT) for providing video content using the IP network may be considered as one embodiment of the content network. In the case of OTT, the CDN may be connected for efficient use of network resources. The content network including the CDN may include an encoder, a packager, a content server, an operator controller, and the CDN. The content of the OTT may be delivered to the CDN through encoding and packaging. In addition, the encoded and packaged content may be stored in the content server and then delivered to the CDN in response to a request for the content. The content delivered to the CDN may be delivered to the multicast sender. According to an embodiment, the content of the OTT may be delivered to the multicast sender directly without assistance of the CDN and multicast. The encoder of the OTT may encode the content. The OTT may provide a live service or produce content to be stored in the content server. The packager of the OTT is configured as described above with reference to the previous drawings. The content server of the OTT may store media data and relevant signaling to be provided by the OTT. The content server may also store third party content generated and utilize the same for multicast if necessary. Here, the content stored in the content server may not require a separate encoding operation. Accordingly, the content server may store the media segment and the file formed by encoding or packaging the content, and may transmit the same when there is a transmission request. According to an embodiment, an encoding result of the media data may be stored in the content server, and a separate packaging operation may be required depending on the type of the transmission network. The operator controller may collect control and signaling data for a plurality of devices and nodes in the content network and, if necessary, transmit the control and signaling data to the multicast network. Thereby, the operator controller may enable the multicast network to perform signaling and control related to multicast. In addition, the operator controller may receive and process unicast information transmitted from a decoding device or a player to use the same for multicast. The OTT and CDN may each include a separate operator controller. The operator controller included in the OTT and the operator controller included in the CDN may communicate with each other.

The ABR multicast network is a network that multicasts content delivered from the content network over the IP network. Here, the IP network may correspond to either a managed network where QoS is managed by a network provider and unauthorized traffic may be restricted, or an unmanaged network where unauthorized traffic is not restricted. In addition, the IP network may be connected in a wired or wireless manner by devices included in the multicast network or the user network. In using the IP network for multicast, the IP network connected to the content network may be different from the IP network connected to the user network. That is, the content network and the user network may be connected to separate IP networks. In this case, the separate IP networks may conform to a connection protocol between Internet Service Providers (ISP) providing the respective networks. Even in this case, the multicast content is transparent between the transmitter and the receiver. That is, the output data of the transmitter is the same as the input data of the receiver, even though it passes through several ISP networks and nodes on the network.

The multicast network for transmitting and receiving multicast streams may include a multicast sender (server), a multicast receiver (client), and a multicast network controller. The multicast network may include a plurality of networks, depending on the location or connection status of the sender and receiver of the network for multicast. In addition, a separate protocol may be used for each network.

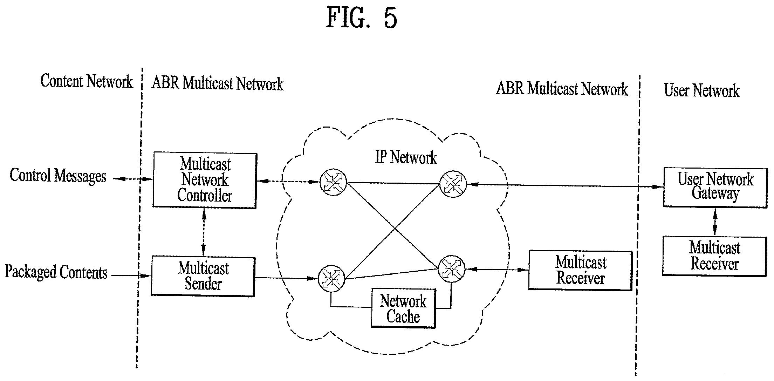

FIG. 5 is a diagram illustrating a wired multicast network according to an embodiment of the present invention. Multicast streams may be delivered over a wired IP network. A network provided by an ISP may be used between the multicast sender and the multicast receiver. According to an embodiment, the multicast stream may be delivered over an IP network managed by a plurality of ISPs, and the management entities of the multicast sender, receiver, controller and IP network may be different from each other. In this case, transmission of the multicast stream may conform to a connection protocol corresponding to each ISP.

The multicast sender included in the multicast network may transmit content data to each multicast receiver. The multicast sender may receive packaged content from the content network and transmit the packaged content to a plurality of multicast receivers using the multicast protocol. The multicast receiver included in the multicast network may receive the content data transmitted from the multicast sender and deliver the content data to a decoding device capable of reproducing the content data. The multicast receiver may cache the content data to allow the decoding device to reproduce the content data efficiently. According to an embodiment, the multicast receiver may be configured in the same apparatus as the decoding device. In an embodiment, a multicast stream may be received through a gateway of the user network. In this case, the multicast receiver may be a component of the user network.

The multicast network controller included in the multicast network may control content transmission of the multicast sender and related session information. In addition, the multicast network controller may manage and transmit signaling information for configuration of each of the multicast sender and multicast receivers. The multicast network controller may be connected to each of the multicast sender and multicast receivers using a protocol separate from that of the multicast content. According to an embodiment, the multicast network controller may be connected only to the multicast sender, and signaling information transmitted to the multicast receiver may conform to the same protocol as that of the multicast content.

A network cache included in the multicast network may include a node or a device functioning as a cache between the multicast sender and the multicast receivers. In a multicast transmission, the network cache may store a proper range of content for efficient use of network resources, and deliver a multicast stream to the multicast receiver. According to an embodiment, the network cache may perform an update procedure for the multicast sender and the cached content.

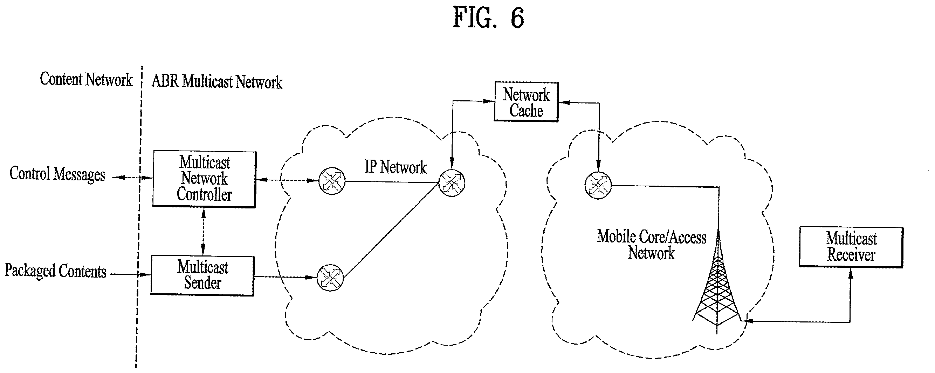

FIG. 6 is a diagram illustrating a mobile multicast network according to an embodiment of the present invention. A multicast stream may be delivered over a wired IP network. However, for a mobile receiver, the multicast stream may be delivered over a mobile access network. For IP multicast, a network that supports IP transport may be used as the mobile access network. In addition, the mobile access network may support multicast to provide a multicast stream to a plurality of mobile receivers.

The multicast sender included in the multicast network may transmit content data to each multicast receiver. The multicast sender may receive packaged content from the content network and transmit the packaged content to a plurality of multicast receivers using a multicast protocol. The multicast receiver included in the multicast network may receive the content data transmitted from the multicast sender and deliver the content data to a decoding device capable of reproducing the content data. The multicast receiver connected to the mobile access network may receive a radio signal for the mobile access network. According to an embodiment, the multicast receiver connected to the mobile access network may be connected to the decoding device according to a separate wireless access protocol. The multicast receiver may cache the content data to allow the decoding device to reproduce the content data efficiently. According to an embodiment, the multicast receiver may be configured in the same apparatus as the decoding device.

The multicast network controller included in the multicast network may control content transmission of the multicast sender and related session information. In addition, the multicast network controller may manage and transmit signaling information for configuration of each of the multicast sender and multicast receivers. The multicast network controller may be connected to each of the multicast sender and multicast receivers using a protocol separate from that of the multicast content. According to an embodiment, the multicast network controller may be connected only to the multicast sender, and signaling information transmitted to the multicast receiver may conform to the same protocol as that of the multicast content. In addition, the IP network and the mobile access network may each include a multicast network controller. In this case, the multicast network controller may transmit and receive control and signaling information about the corresponding network. Each of the multicast network controllers may use a separate protocol to perform communication between the multicast network controllers.

The network cache included in the multicast network may include a node or a device functioning as a cache between the multicast sender and the multicast receivers. The network cache may be included in each of a plurality of networks constituting the multicast network, and a plurality of network caches may be included in each network. In addition, some nodes of each network may simultaneously perform the cache function. The network cache may store a proper range of content to efficiently use network resources in multicast transmission, and deliver a multicast stream to the multicast receivers. According to an embodiment, the network cache may perform an update procedure for the multicast sender and the cached content.

The user network may be referred to as a network to receive data from the multicast network and deliver the same to a device to consume the content included in the data. The user network may be implemented in various forms according to the configuration of the user network and the type of a service provided by multicasting. According to an embodiment, the multicast receiver described above may be included in the user network. When the multicast receiver is included in the user network, the multicast receiver may receive multicast content through a device serving as a gateway or proxy included in the user network. In this case, the gateway or proxy may be considered as a component of the ABR multicast network.

The multicast receiver may serve as a server or a multicast sender in the user network. Accordingly, the decoding device included in the user network may consume the multicast content, and may enable multicast streaming even when the decoding device cannot directly receive the multicast content.

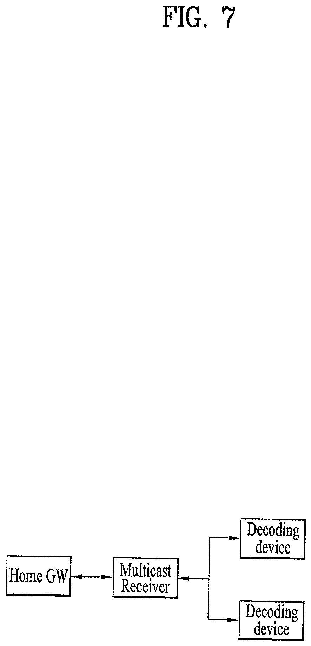

FIG. 7 is a diagram illustrating a user network according to an embodiment of the present invention. As an embodiment of the user network, a home network may be considered. The multicast receiver may directly receive data transmitted through multicasting, or a home gateway belonging to the home network may receive the data and deliver the data to the multicast receiver.

When the home network includes a plurality of devices, the home gateway may receive data from the ABR multicast network. The home gateway may transmit and receive data to and from an external network, while serving as a proxy. In the case where the home gateway operates as a proxy, the home gateway may cache data to be delivered to the multicast receiver.

The multicast receiver may be included in the ABR multicast network described above, or may be located inside the home network due to the configuration of the network. According to the configuration of the home network, the multicast receiver may serve as a proxy. In the case where the multicast receiver cannot play the multicast stream directly, a decoding device capable of playing the multicast stream may be additionally connected to the multicast receiver. In addition, the multicast receiver may transmit the multicast stream in connection with a plurality of decoding devices.

The decoding device may be defined as a device to play a multicast stream and provide the multicast stream to a user. A plurality of decoding devices may connect to the multicast receiver. The decoding devices may transmit and receive data in a unicast or multicast manner. The decoding device may connect to a unicast network as well as the multicast network to receive a multicast stream. The decoding devices may transmit a request, a report, or the like to the content network or the ABR multicast network. In some embodiments, besides the decoding device, a decoding module and a display screen may be included in the home network as separate devices. The decoding device may also be configured together with the multicast receiver as a single device.

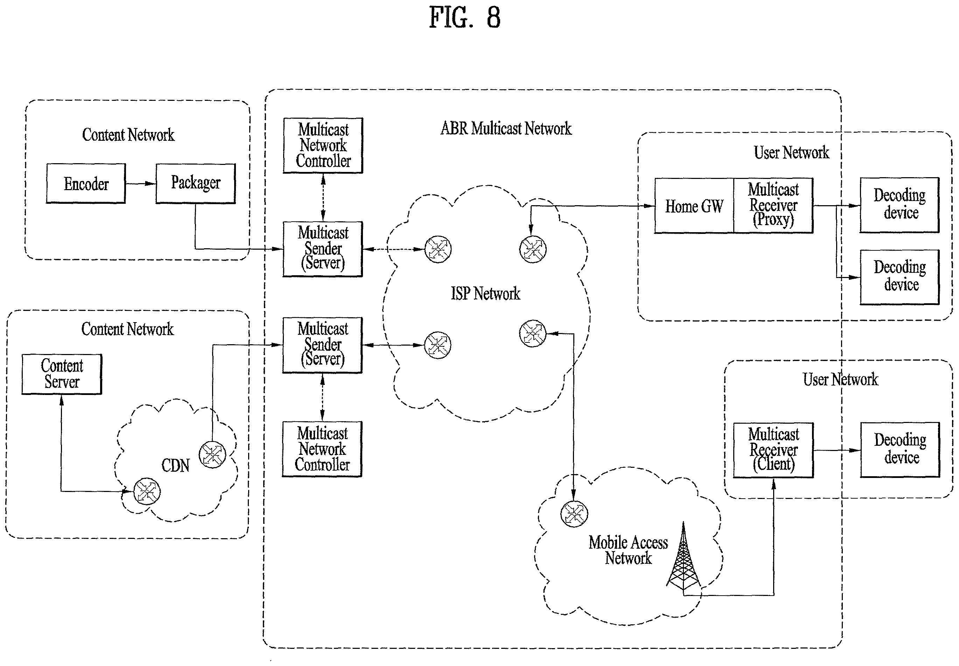

FIG. 8 is a diagram illustrating network architecture for ABR multicast according to an embodiment of the present invention. The figure illustrates an example of overall network architecture for adaptive media streaming. The network architecture for adaptive media streaming may include a content network, an ABR multicast network, and a user network. Details of each of the networks are the same as those described above with reference to the previous drawings. The node or entity defined in the present invention may be a logical constituent. According to an embodiment, each node may be configured as a separate device, or may operate together with a neighboring node in the same apparatus. As shown in the figure, a plurality of networks may be connected to each other and exchange signaling and management information with each other for efficient multicast streaming.

Hereinafter, network interfaces and protocols for adaptive media streaming will be described. The protocols may be classified into a media protocol by which media data is actually transmitted, and a signaling protocol for controlling each node or entity to transmit media data or transmitting configuration information about the media data to various nodes and entities including a receiver. Signaling and control information may be transmitted by the signaling protocol. However, in the case where the receiver receives with media content by a single connection, a separate signaling path may not be configured. In this case, the signaling and control information may be delivered by the media protocol.

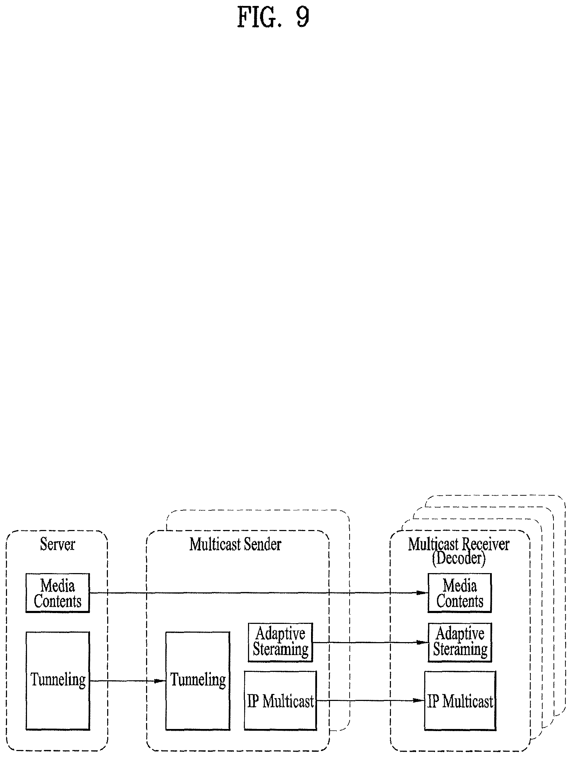

FIG. 9 is a diagram illustrating a protocol for adaptive multicast streaming according to an embodiment of the present invention. As shown in the figure, a multicast receiver may include the same devices and modules as a decoder. Media content created in the content network or stored in a server may be delivered to the decoding device of a user. The media content may be transmitted in a multicast manner so as to be delivered to a plurality of users.

In the adaptive multicast streaming environment, creation and multicast transmission/reception of content may be performed separately. Therefore, a protocol for delivering created content to a node and an entity configured to perform multicast transmission and a protocol for transmitting and receiving the content in the adaptive streaming format in the multicast manner may be defined, respectively. In the figure, the node and the entity are shown as multicast senders. Content data passes through a plurality of nodes or entities, and an appropriate protocol is needed between the nodes or the entities. In this case, for a protocol on a node or an entity, a protocol for efficiently delivering data to the next node in real time may be used. This protocol may be referred to as a tunneling protocol. Accordingly, as shown in the figure, a tunneling protocol may be defined between the server and a multicast sender. In this case, the media content is delivered as a payload of the tunneling protocol, but it should be noted that the tunneling protocol can operate regardless of the format of the media content.

In the multicast sender, a protocol for supporting adaptive streaming for multicast receivers may be defined, and the IP multicast scheme may be employed to deliver the adaptive streaming to a plurality of multicast receivers. Depending on the protocol of adaptive streaming, the IP multicast scheme may be defined as a combination of TCP/IP and UDP/IP.

When the multicast receiver can serve as a decoder and player, the multicast receiver may obtain adaptive streaming data by receiving an IP multicast packet, decode data corresponding to the media content format from the data and play decoded data.

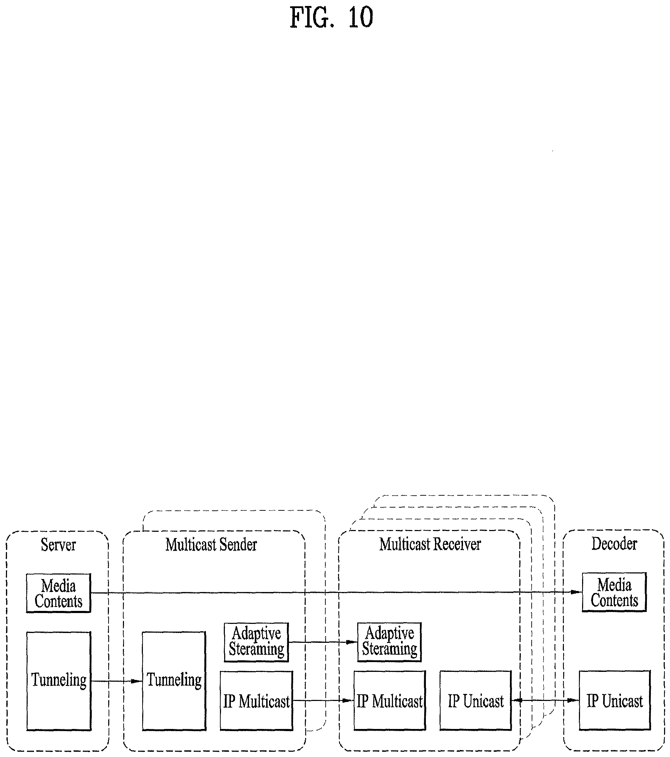

FIG. 10 is a diagram illustrating a protocol for adaptive multicast streaming according to an embodiment of the present invention. As shown in the figure, a multicast receiver may be configured as a device or module separate from the decoder (media player). Media content created in the content network or stored in a server may be delivered to the decoding device of a user. The media content may be transmitted in a multicast manner so as to be delivered to a plurality of users.

In the adaptive multicast streaming environment, creation and multicast transmission/reception of content may be performed separately. Therefore, a protocol for delivering created content to a node and an entity configured to perform multicast transmission and a protocol for transmitting and receiving the content in the adaptive streaming format in the multicast manner may be defined, respectively. In the figure, the node and the entity are shown as multicast senders. Content data passes through a plurality of nodes or entities, and an appropriate protocol is needed between the nodes or the entities. In this case, for a protocol on a node or an entity, a protocol for efficiently delivering data to the next node in real time may be used. This protocol may be referred to as a tunneling protocol. Accordingly, as shown in the figure, a tunneling protocol may be defined between the server and a multicast sender. In this case, the media content is delivered as a payload of the tunneling protocol, but it should be noted that the tunneling protocol can operate regardless of the format of the media content.

In the multicast sender, a protocol for supporting adaptive streaming for multicast receivers may be defined, and the IP multicast scheme may be employed to deliver the adaptive streaming to a plurality of multicast receivers. Depending on the protocol of adaptive streaming, the IP multicast scheme may be defined as a combination of TCP/IP and UDP/IP.

When the multicast receiver and the decoder (player) are configured as separate devices or modules, the multicast receiver may obtain adaptive streaming data by receiving an IP multicast packet and deliver the same to the decoder. Here, an IP unicast protocol may be used between the multicast receiver and the decoder. The content data received by the multicast receiver may be delivered to the decoder by the IP unicast protocol, and the decoder may decode and play data corresponding to the received media content format.

Hereinafter, a protocol for signaling and control messages will be described. Transmission of signaling and control messages may be defined by a protocol distinct from the protocol for media content transmission in order to provide transmission control, scheduling, configuration information, and the like when each node and each entity perform adaptive streaming. Depending on a case where each node and each entity are connected, the protocol may be defined as a separate protocol. In the above-described network architecture, a signaling and control message may be included and transmitted in the protocol for transmission of media content. However, such a signaling and control message conforms to a protocol for media content delivery.

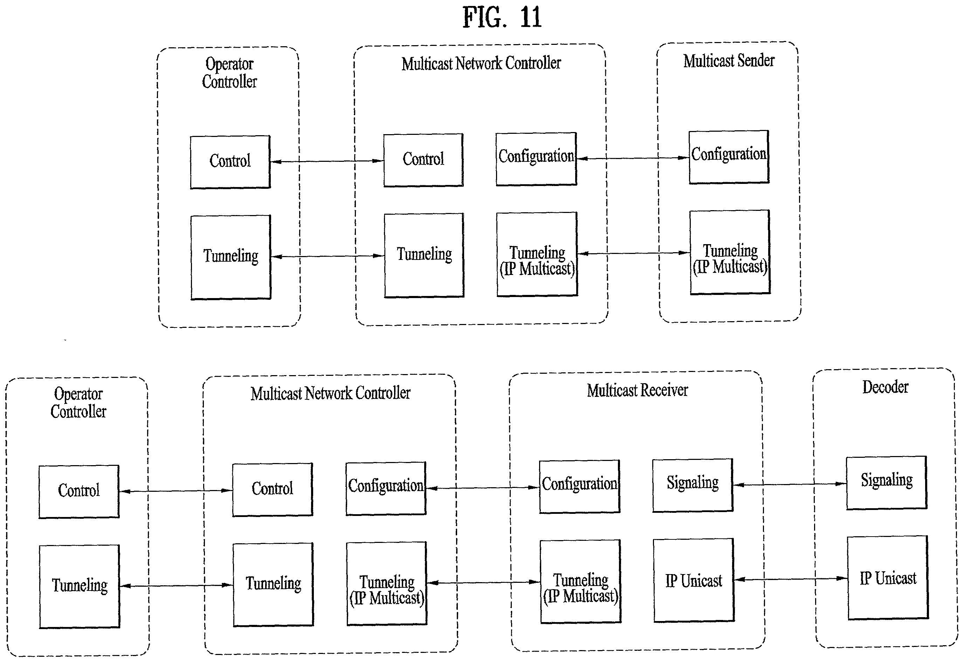

FIG. 11 is a diagram illustrating a protocol for signaling and control messages according to an embodiment of the present invention. In the above-described network architecture, a control protocol may be defined between an operator controller included in the content network and a network controller included in the multicast network. The network controller may send a response or report message for a control message to the operator controller in order for the operator controller to generate control and management messages. Thus, the tunneling protocol for sending a control message may be bidirectionally configured. A single operator controller may transmit and receive control messages to and from a plurality of multicast network controllers. In addition, each of the multicast network controllers may be managed by a separate management entity.

The network controller may deliver configuration related information about the network to the multicast sender and the multicast receiver. The network controller may deliver configuration information about network resources, information about mapping between the nodes of the network, routing information, and the like. It may also deliver configuration information received from the operator controller to the multicast sender or the multicast receiver. In this process, the protocol for transmission from the multicast network controller to the multicast sender may be distinguished from the protocol for transmission to the multicast receiver. The upper part of the figure shows the protocol for transmission from the network controller to the multicast sender, and the lower part of the figure shows the protocol for transmission from the network controller to the multicast receiver.

In addition, IP multicast may be used to deliver a configuration message from one network controller to a plurality of multicast senders and multicast receivers. Connection information, statistical information, and the like collected by the multicast senders and the multicast receivers may be reported to the multicast network controller. Since this process can be carried out independently by each of the multicast senders and multicast receivers, a unicast protocol may be used. This set of control information, configuration information, and the like may be updated dynamically and be transmitted immediately or by scheduling.

The multicast receiver may use a signaling protocol for transmitting the received adaptive streaming data to a decoding device. Here, an IP unicast protocol may be defined to provide separate information to individual decoding devices. In addition, the decoding device may transmit signaling of a request of the decoding device to the multicast receiver using the IP unicast protocol. Thus, the protocol may be defined as a bidirectional protocol between the multicast receiver and the decoding device.

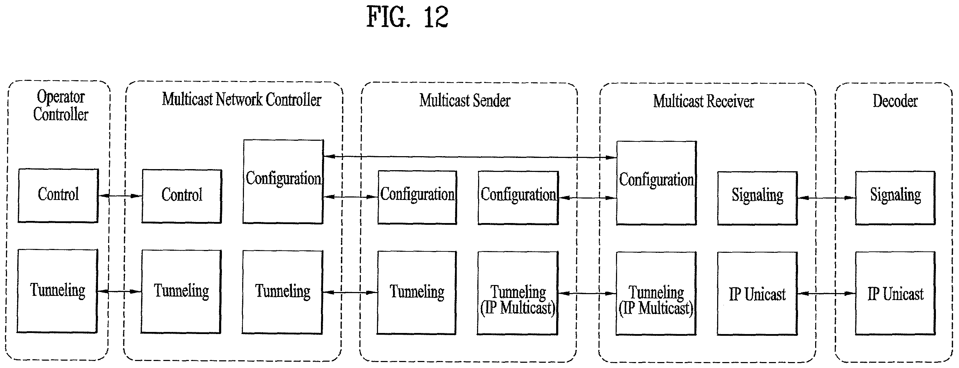

FIG. 12 is a diagram illustrating a protocol for signaling and control messages according to an embodiment of the present invention. As shown in the figure, the multicast network controller may be connected to the multicast receiver via a multicast sender rather than being connected directly to the multicast receiver.

The network controller may deliver configuration related information about the network to the multicast sender and the multicast receiver. The network controller may deliver configuration information about network resources, information about mapping between the nodes of the network, routing information, and the like. It may also deliver configuration information received from the operator controller to the multicast sender or the multicast receiver. However, since the multicast controller is connected only to the multicast sender and not to the multicast receiver, the multicast sender may forward the configuration message delivered from the network controller to the multicast receiver. For a protocol or message set related to configuration in the multicast network controller, the protocol for transmission to the multicast sender may be distinguished from the protocol for transmission to the multicast receiver.

In addition, IP multicast may be used to deliver a configuration message from one network controller to a plurality of multicast senders and multicast receivers. Connection information, statistical information, and the like collected by the multicast senders and the multicast receivers may be reported to the multicast network controller. Since this process can be carried out independently by each of the multicast senders and multicast receivers, a unicast protocol may be used. This set of control information, configuration information, and the like may be updated dynamically and be transmitted immediately or through scheduling.

Information such as a report to be transmitted from the multicast receiver to the multicast network controller may be delivered to the multicast network controller via the multicast sender. That is, the multicast sender may forward a report message or the like to be delivered from the multicast receiver to the multicast network controller. Operations of the other protocols may be the same as those in the above-described drawings.

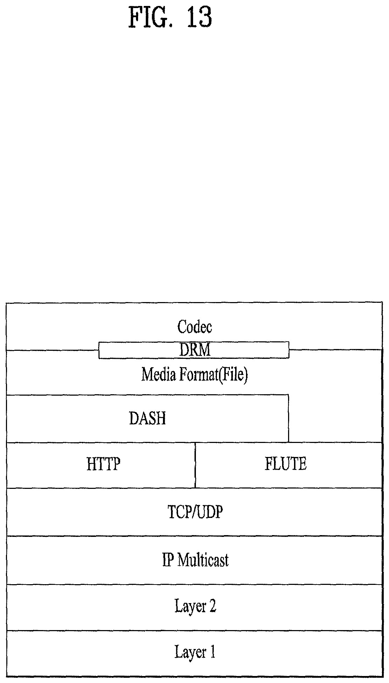

FIG. 13 is a diagram illustrating a protocol for transmitting media data over an IP network according to an embodiment of the present invention. A protocol and a packet format may be determined according to each layer. Each protocol may be configured independently or specific protocols may be combined for interoperability. The operation of the encoder of compressing and converting the collected video and audio data into an appropriate codec and delivering a packager may be performed as internal data processing of a transmission system. For multicasting of the video and audio data, an efficient codec may be used. A codec such as High Efficiency Video Coding (HEVC) or Advanced Video Coding (AVC) may be used for the video data, and an audio codec such as Advanced Audio Coding (AAC), Audio Compression 4 (AC4), or Moving Picture Experts Group-H (MPEG-H) may be used for the audio data.

Each codec may be packaged in a form suitable for transmission or storage. For this purpose, a format such as ISO Base Media File Format (ISOBMFF), Common Media Application Format (CMAF), or MPEG-2 TS (Transport Stream) may be used. In the process of packaging content data encoded with a codec, Digital Rights Management (DRM) may be added to allow only a specific receiver to play the contents, and an authentication key value used in the DRM may be transmitted on a separate link or channel.

For media data configured in a file format, a protocol capable of transmitting files directly, such as File Delivery over Unidirectional Transport (FLUTE), may be used according to transmission scheme. In addition, a protocol supporting adaptive streaming, such as Dynamic Adaptive Streaming over HTTP (DASH), may be used. A lower layer protocol may be used according to the configuration of FLUTE or DASH. For example, when DASH is used, HTTP may be used as a lower layer protocol, or FLUTE may be used as a lower layer protocol considering a DASH segment as a file.

For IP multicast, Transmission Control Protocol/Internet Protocol (TCP/IP) or User Datagram Protocol/Internet Protocol (UDP/IP) may be used according to the configuration of the upper layer protocol. Internet Group Management Protocol (IGMP) capable of managing subscription of a IP multicast group and the like may also be used in the multicast receiver. The Layer 2 protocol and Layer 1 protocol may be defined according to the transport links thereof. That is, optimized protocols may be configured according to links between the nodes and entities configured on a network. For example, in a Local Area Network (LAN) environment, Ethernet may be defined as a protocol for Layer 2, and Carrier Sense Multiple Access with Collision Detection (CSMA/CD) may be defined as protocol for Layer 1.

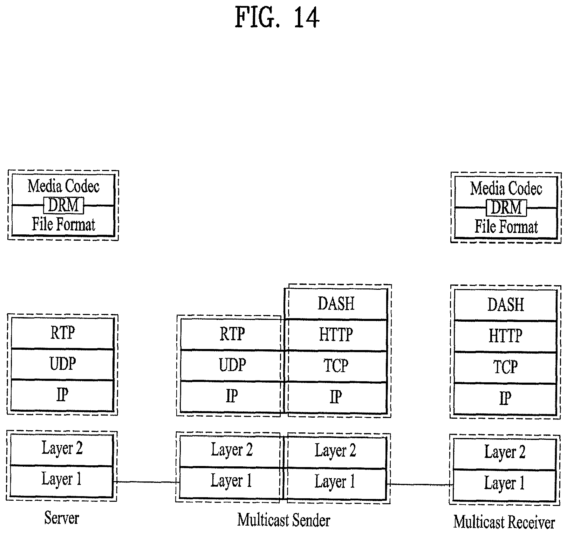

FIG. 14 is a diagram illustrating a media delivery protocol for IP multicasting according to an embodiment of the present invention. The media delivery protocol is a specific embodiment of a protocol according to a path through which media content is transmitted. In the illustrated case, the multicast receiver is configured with the same device and module as the decoder (media player).

Protocols used on the server for content are a media codec and a file format. The media codec may include a video codec, an audio codec or other encoding formats. The video codec may include a codec such as HEVC or AVC, and the audio codec may include a codec such as AAC, AC4, and MPEG-H. The protocol for the file format may be defined as a format for transmitting or storing a codec format in the form of a file. For this purpose, file formats such as ISOBMFF and CMAF may be used, and the format of MPEG-2 TS may be used when the existing broadcast network is connected. A plurality of file formats may be used in consideration of transmission efficiency.

For a protocol between the server and the multicast sender, a protocol for efficient delivery of file formats may be mainly defined. Therefore, data of the content created in the server may be delivered using a tunneling protocol. As the tunneling protocol, a real-time transmission protocol such as RTP may be mainly used, and other IP-based tunneling protocols which are available to the corresponding network may also be used. In this case, an existing protocol may be used or the definition of a field may be changed so as to be suitable for the network. In the multicast sender, a tunneling protocol may be defined at the input terminal to receive a file transferred from the server using the tunneling protocol. In this case, since the format for the file transmitted using the tunneling protocol is data to be delivered from the multicast sender to the multicast receiver, the tunneling protocol may operate regardless of the format of the data.

As the protocol between the multicast sender and the multicast receiver, a protocol for adaptive streaming may be mainly defined. This protocol may include a DASH-based protocol. For this purpose, the lower layer protocol is based on IP multicast. In order for DASH to operate, a protocol such as HTTP may be used together with DASH. In the case where a DASH segment is used in the form of a file, a file transfer protocol such as FLUTE may be configured. In addition, TCP/IP may be used for effective connection and multicast transmission of DASH/HTTP on the network.

The multicast receiver may use TCP/IP to receive a packet stream transmitted in a multicast manner. In addition, the multicast receiver may use HTTP for a request for a packet stream, a response to the received data, and the like. When the multicast sender uses DASH for adaptive streaming, the multicast receiver may include a DASH client. Data that is adaptively streamed using DASH is configured in a file format transmitted from the server. Accordingly, the multicast receiver may use a file format related protocol capable of identifying the file format and a media codec capable of decoding the identified media format.

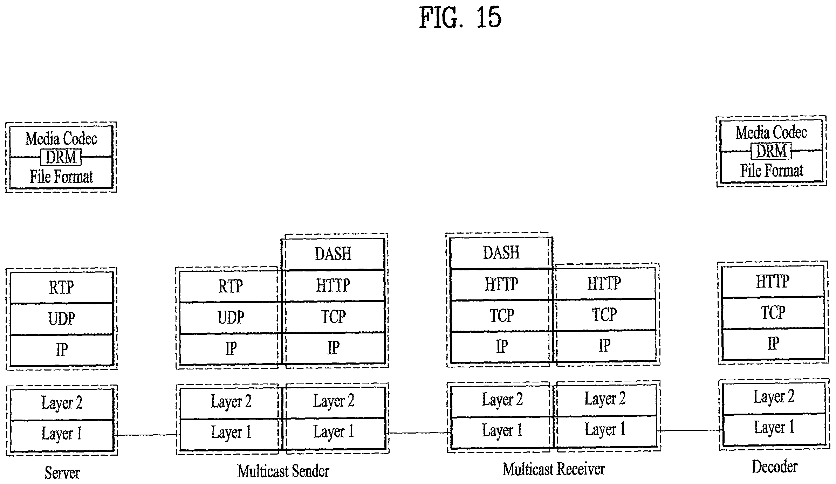

FIG. 15 is a diagram illustrating a media delivery protocol for IP multicasting according to an embodiment of the present invention. The media delivery protocol is a specific embodiment of a protocol according to a path through which media content is transmitted. This embodiment represents a case where the multicast receiver is configured as a device or module separate from the decoder (media player). Therefore, the multicast receiver needs a process of transmitting a received multicast stream to the decoding device (decoder).

The multicast receiver may use TCP/IP to receive a packet stream transmitted in a multicast manner. In addition, the multicast receiver may use HTTP for a request for a packet stream, a response to the received data, and the like. When the multicast sender uses DASH for adaptive streaming, the multicast receiver may include a DASH client. The multicast receiver may serve as a proxy for data that is adaptively streamed using DASH. The multicast receiver may deliver the data to the decoding device. Since the number of decoding devices connected to the multicast receiver may be limited, the corresponding connection may be based on unicast transmission. Accordingly, the multicast receiver may use HTTP and TCP/IP as protocols for unicast connection.

The decoding device may use a unicast protocol to receive data transmitted from the multicast receiver. Data delivered by HTTP unicast may have a file format transmitted by the server. Accordingly, the decoding device may use a file format related protocol capable of identifying the file format and a media codec capable of decoding the identified media format. Operations of the other protocols may be the same as those in the embodiment described with reference to the previous drawings.

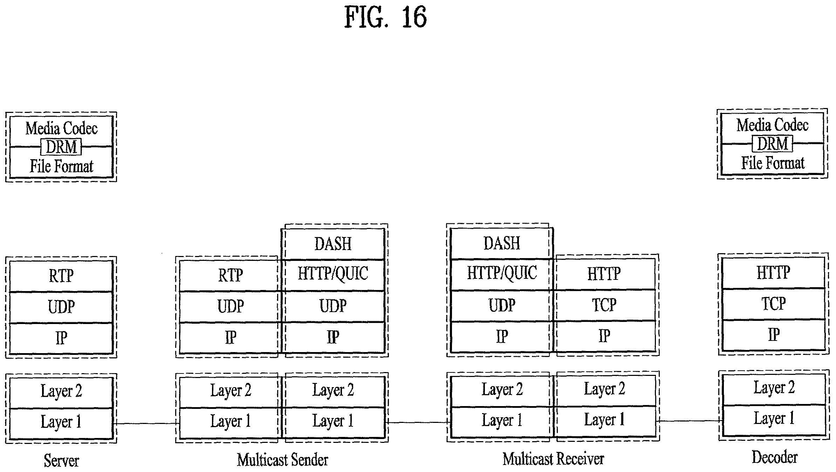

FIG. 16 is a diagram illustrating a media delivery protocol for IP multicasting according to an embodiment of the present invention. For transmission of the DASH segment, the Quick UDP Internet Connections (QUIC) protocol may be used. The multicast scheme using TCP/IP may incur delays in establishing connections and may not be suitable for immediate transmission of streaming data. In the QUIC based protocol, QUIC is responsible for a process of connection and flow control. In addition, QUIC may use HTTP/2, thereby addressing the issue of transmission delay incurred by the existing protocol HTTP. In addition, streaming data may be immediately transmitted using UDP/IP. Operations of the other protocols are the same as those in the above-described embodiment.

In an IP-based multicast network, a delivery protocol used to support adaptive media streaming may include a plurality of protocols. In particular, receivers to receive adaptive media streaming are divided into various types according to device type, mobility, and screen size, and are required to support multiple protocols for delivery using the same framework. Even when a plurality of protocols is applied between the multicast sender and the multicast receiver, the media data format transmitted using each protocol may be the same. Examples of delivery protocols for adaptive media streaming will be described below. As multicast delivery protocols, File Delivery over Unidirectional Transport (FLUTE), Real-time Object delivery over Unidirectional Transport (ROUTE), NACK-Oriented Reliable Multicast (NORM), Quick UDP Internet Connections (QUIC), Real Time Protocol (RTP), Common Mezzanine Distribution Format (CMZF), and the like may be used.

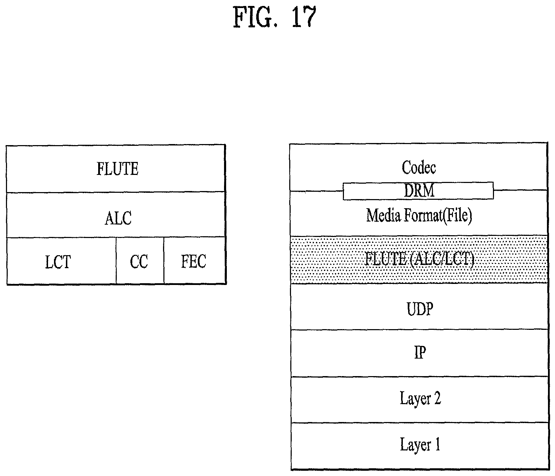

FIG. 17 illustrates a protocol stack of Internet Protocol (IP) multicast according to an embodiment of the present invention. FLUTE is a protocol mainly used for file delivery, and is configured on Asynchronous Layered Coding (ALC), which is a protocol for transferring arbitrary binary objects. ALC is configured in combination with a Layered Coding Transport (LCT) building block, a Congestion Control (CC) building block, and a Forward Error Correction (FEC) building block. FLUTE provides information for identifying various characteristics related to a file to be transmitted in a file delivery session, using a file description table (FDT). ALC uses the LCT building block for in-band session management and the FEC building block for reliability of transmission. The left part of the figure shows the architecture of the building block configuration for FLUTE described above. FLUTE is transmitted using IP/UDP. The right part of the figure shows an IP multicast protocol stack using FLUTE.

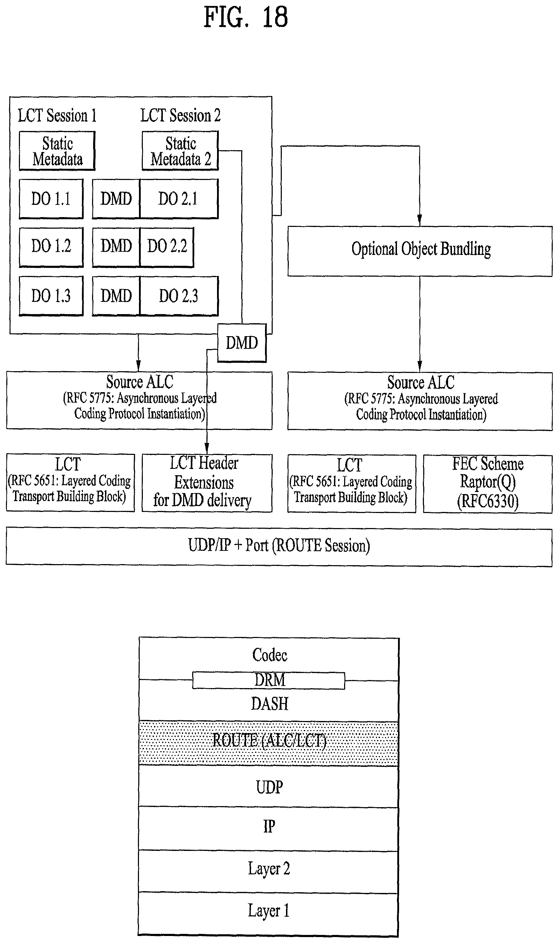

FIG. 18 illustrates the architecture of a ROUTE protocol according to an embodiment of the present invention. The upper part of the figure shows the architecture of the ROUTE protocol defined in the standard document, Advanced Television System Committee (ATSC) 3.0, which has an extension of the FLUTE protocol. Referring to the upper part of the figure, LCT session 1 transmits a source ALC packet for a specific object. LCT session 2 transmits a repair ALC packet. The ROUTE protocol uses UDP port numbers to support sessions for multiple services. This operation may function in a single network configuration, but it cannot actively assign a port number. Therefore, it is necessary to support a separate method therefor. The lower part of the figure shows a protocol stack in which the ROUTE protocol is used.

NORM may also be used as a multicast delivery protocol. NORM is a protocol for delivering messages through the multicast UDP, and has been proposed as a multicast delivery protocol because it can deliver the same packet to a plurality of clients. When NORM is used, the following three messages may be generated and transmitted from the server. These messages may be sent through the UDP for multicast.

The NORM_INFO message may be used by the sender to send additional information that is to be with NORM delivery objects. The NORM_DATA message may be used by the sender to send application data to the receiver. The NORM_CMD message may be used to send miscellaneous commands to the receiver. Here, the NORM_DATA message may have three subtypes, i.e., NORM_OBJECT_FILE, NORM_OBJECT_DATA, and NORM_OBJECT_STREAM. NORM_OBJECT_FILE is content of a fixed size, and may particularly indicate file content. NORM_OBJECT_DATA is also content of a fixed size, and may indicate the same memory content as the FILE type. NORM_OBJECT_STREAM may indicate a continuous stream of data whose length is not fixed.

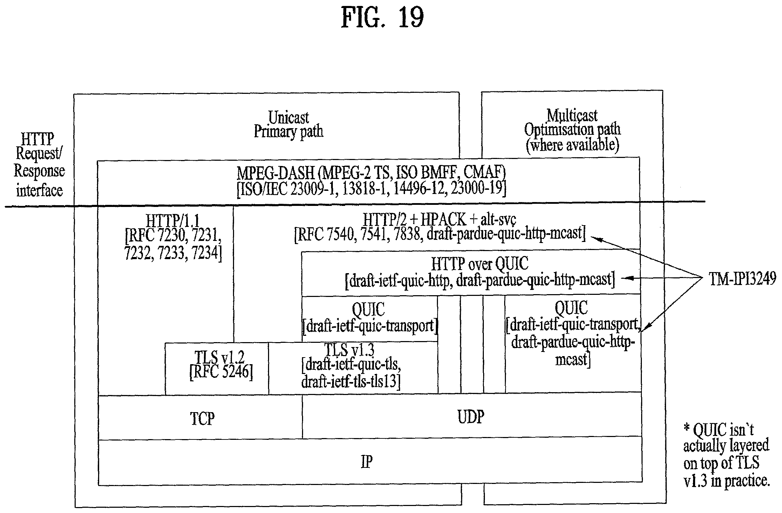

FIG. 19 illustrates a QUIC protocol according to an embodiment of the present invention. QUIC is a UDP-based delivery protocol, but the purpose thereof is to optimize TCP-based connections without delay. However, multicast transmission over QUIC is also being considered. In this regard, a protocol as shown in the figure may be given. QUIC is a UDP-based object delivery protocol for a scalable IP-based TV distribution system. QUIC may compensate for the shortcomings of the process of connection long-standing between a TCP-based user and a server, and may transfer UDP datagrams utilizing FEC similar to TCP. QUIC may also multiplex and send related application level data and support multicast using an HTTP-based Web-oriented mechanism. That is, QUIC may support multicast and unicast.

As a multicast delivery protocol, RTP may be used. RTP is a protocol for delivering real-time data such as audio and video data using multicast and unicast networks. RTP does not guarantee a separate service quality, but may be extended when it is used with RTCP, which is a control protocol. RTCP allows for minimal control and media identification.

As a multicast delivery protocol, CMZF may also be used. CMZF is a format for mainly transmitting MPEG-2 TS and may be mainly transmitted through an RTP or MPEG-2 TS stream.

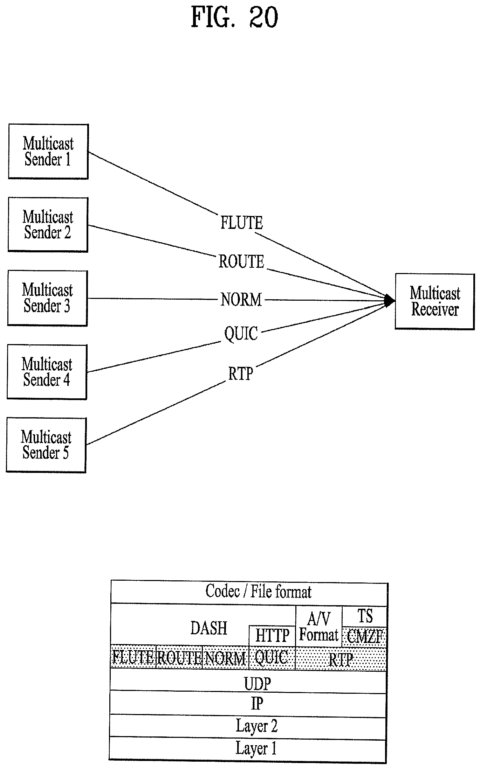

FIG. 20 illustrates a multicast reception method through a plurality of protocols and a protocol stack according to an embodiment of the present invention. When an adaptive media streaming service is provided over a plurality of networks, multiple protocols, rather than a single protocol, among the aforementioned multicast delivery protocols may be used together for adaptive media streaming. In particular, since each protocol may be limitedly optimized for some networks, a receiver capable of receiving adaptive media streaming over multiple networks requires identification and processing of multiple protocols. The upper part of the figure illustrates an embodiment in which a multicast receiver uses a plurality of protocols in receiving multicast data from a plurality of multicast senders. In the network architecture for adaptive media streaming, each multicast sender may transmit content using a unique delivery protocol. In this case, the multicast receiver receiving content from a plurality of multicast senders is required to support various delivery protocols. In such an interface, the receiver needs to support the protocol as shown in the lower part of the figure to receive multicast data from a plurality of multicast senders. The lower part of the figure shows a protocol stack that the receiver should have in order to receive content of various multicast senders in the above interface.

In this case, since IP/UDP is mainly used as a lower layer protocol of the corresponding delivery protocol, it is difficult for the multicast receiver to recognize the protocol that is used for the multicast sender to transmit a packet. Therefore, a protocol type needs to be announced using separate signaling or a control message, or an intermediate protocol that accepts multiple protocols and multiplexes them into a single protocol is needed.

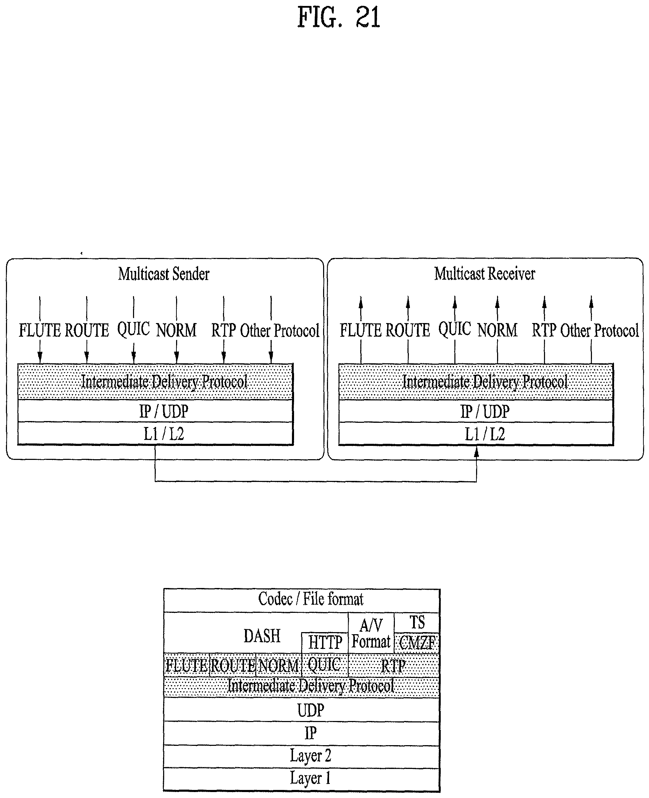

FIG. 21 illustrates a multicast method and protocol stack using an intermediate delivery protocol according to an embodiment of the present invention. As described above, even a receiver supporting a plurality of protocols receives a packet using the IP/UDP protocol as a lower layer protocol, and therefore it is difficult to distinguish multicast protocols by multicast senders. Accordingly, the present invention considers an interface between the multicast sender and the multicast receiver as shown in the upper part of the figure. In order for such an interface to handle multiple protocols, an intermediate delivery protocol may be defined. That is, by defining an intermediate delivery protocol between a plurality of multicast protocols and the IP/UDP layer, the receiver may be enabled to process packets transmitted through various protocols. In the intermediate delivery protocol, data of the adaptive media streaming protocol may be input from a multicast sender. In addition, a new packet structure defined for adaptive media streaming in the future may also be input. Adaptive media streaming data may be encapsulated using the intermediate delivery protocol. The packet encapsulated by the intermediate delivery protocol is included in the IP packet as a payload of IP/UDP, and is delivered to the multicast receiver in a multicast or unicast manner according to the characteristics of the data.

In such an interface, the receiver may have a protocol as shown in the lower part of the figure. In the protocol as in the above-described embodiment, the payload of UDP is the intermediate delivery protocol, which is a single protocol, and therefore a packet received over the IP multicast network may be easily identified. The intermediate delivery protocol may be used to identify the protocol that the multicast sender uses as a delivery protocol. Accordingly, the receiver may directly receive the packet, identify the corresponding multicast delivery protocol, and process the packet without a separate signaling or connection procedure for announcing the protocol used for the operation. That is, since the intermediate delivery protocol includes information about a plurality of protocols used for multicast, the receiver may identify the multicast protocol used for the operation by parsing the intermediate delivery protocol packet.

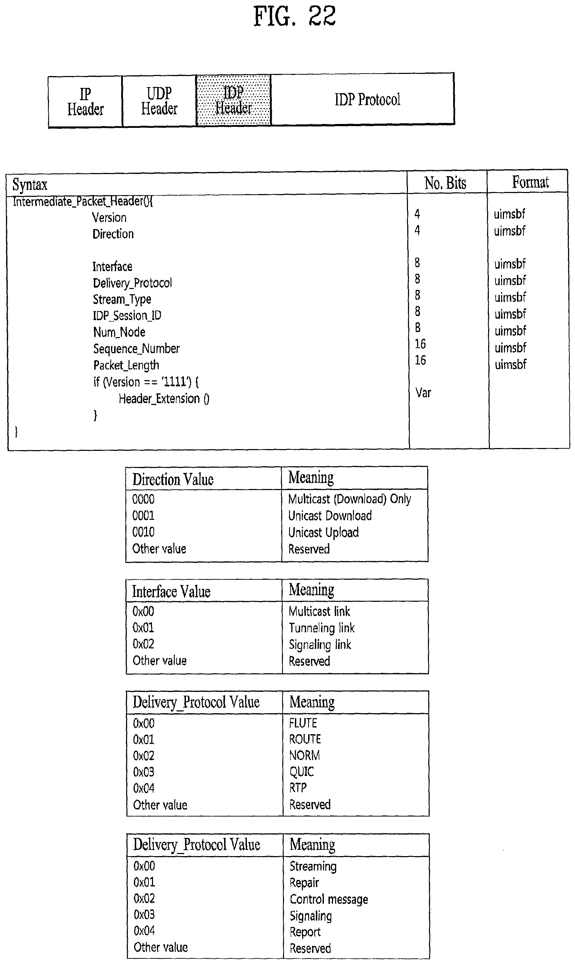

FIG. 22 illustrates an intermediate delivery protocol (IDP) packet according to an embodiment of the present invention. The upper part of the figure shows an embodiment of an Intermediate Delivery Protocol (IDP) packet proposed by the present invention. The IDP packet is included in the payload portion of the IP/UDP packet, and overhead may be minimized by adding a minimum number of fields for packet identification to the IDP header. An embodiment of the syntax of the IDP packet header is shown in the second table of the figure. The IDP header may include the following fields. A Version field (4 bits) indicates the version of the IDP. Here, the version value of '1111' is not used. If the version value is '1111', this means that there is header extension. A Direction field (4 bits) is a field for identifying a direction in which a corresponding packet is delivered. Depending on the value of the field, the field has the following meanings. When the value of the Direction field is 0000, it indicates Multicast (Download) Only. Multicast (Download) Only means that the packet is a Multicast Download packet delivered from the multicast sender to the multicast receiver. When the value of the Direction field is 0001, it indicates Unicast Download. Unicast Download means that the packet is a unicast download packet delivered from the multicast sender to the multicast receiver and that the packet is delivered through HTTP connection or the same method as for the control message. When the value of Direction field is 0010, it indicates Unicast Upload. Unicast Upload means that the packet is a unicast download packet delivered from the multicast receiver to the multicast sender, and the packet may be an HTTP request.

An Interface field (1 Byte) may identify the link through which the packet is delivered. If there are several nodes between the multicast sender and the multicast receiver and the functions of the nodes are different from each other, the field may provide a method to deliver the packet to the multicast receiver through an optimal path. For example, if a packet is delivered to a specific node through an identifier of a signaling link while the specific node handles tunneling, the node may ignore the received packet. As a meaning according to the value of this field, Multicast link is intended to transmit a corresponding packet on the multicast link. Tunneling link is intended to transmit the corresponding packet on the tunneling link. Signaling link is intended to transmit the corresponding packet for signaling delivery. A Delivery_Protocol field (1 Byte) may include information about a delivery protocol configuring a payload. That is, it may indicate that one of FLUTE, ROUTE, NORM, QUIC, and RTP has been used as a delivery protocol according to the value of the field. A Stream_Type field (1 Byte) contains information on the purpose of an actual stream in the protocol defined by the Delivery_Protocol field. This field may indicate one of streaming, repair, control message, signaling, or report depending on the value thereof. For example, if the delivery protocol is RTP, transmission of RTCP is sometimes necessary while using the protocol. In this case, the RTCP may be identified by indicating control message in the Stream_Type field. An IDP_Session_ID field (1 Byte) may assign an ID value for identifying each IDP stream when a plurality of IDP streams is transmitted by the multicast sender. This field may also identify a stream for requesting retransmission or a repair packet such as FEC. A Num_Node field (1 Byte) counts the number of nodes via which a stream is transmitted from the multicast sender to the multicast receiver. When relaying the packet, a relay node, not the receiving node, transmits the stream to the next node by adding 1 to the Num_Node field value. The multicast receiver may use this value to determine reliability of the packet. That is, when the value of the corresponding field decreases, the multicast receiver may determine higher reliability for the packet. The Sequence_Number field (2 Byte) is incremented by 1 each time an IDP packet is generated and is wrapped around to 0x0000 followed by 0xFFFF. The delivery order may be changed according to the payload of the IDP packet, and the multicast receiver may restore the original IDP packet order using this field. A Packet_Length field (2 Byte) indicates the total length including the header and payload of the IDP packet in bytes.

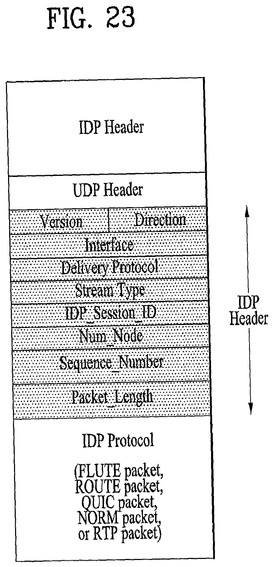

FIG. 23 is a diagram illustrating an Internet Protocol (IP) packet including an IDP packet according to an embodiment of the present invention. The IDP packet may include an IDP header and an IDP payload. The IDP header may include the syntax of the IDP header described in the previous figure. That is, the IDP header may include version information, direction information, interface information, delivery protocol information, stream type information, IDP session ID information, node number information, sequence information, and packet length information. The IDP payload may include multicast data and may include a FLUTE packet, a ROUTE packet, a QUIC packet, a NORM packet, or an RTP packet according to the multicast delivery protocol. The IDP packet may be included as a payload of the IP/UDP packet, and the UDP header and the IP header may be sequentially added in front of the IDP packet. Thereby, the multicast receiver may identify and process a plurality of multicast delivery protocols by applying the IDP between the IP/UDP protocol and the multicast delivery protocol without additional signaling.

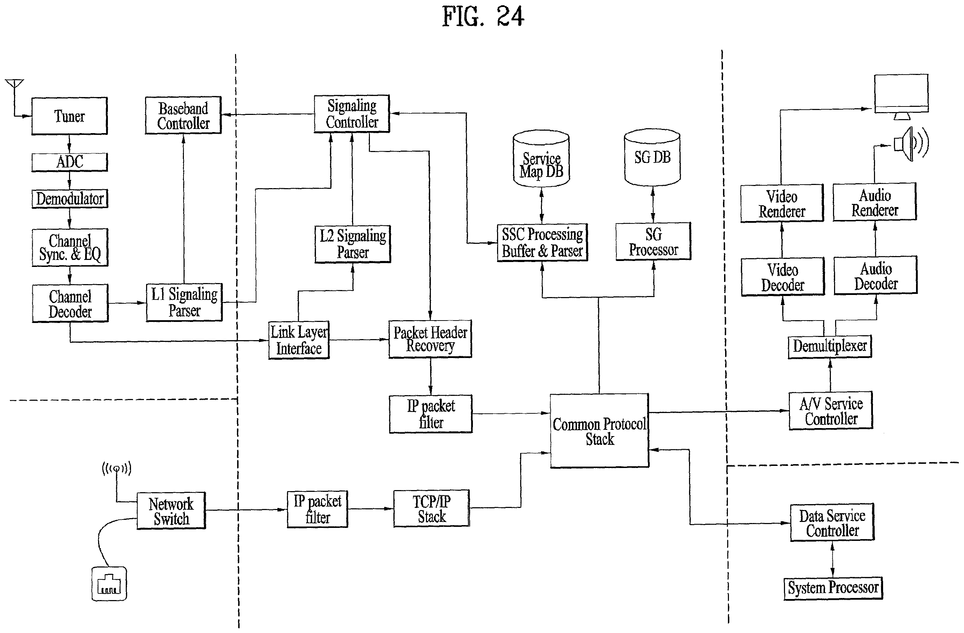

FIG. 24 is a diagram illustrating a receiver structure according to an embodiment of the present invention. The receiver may receive a broadcast signal or a multicast signal using a tuner. The receiver may convert an analog signal into a digital signal using an analog-digital converter (ADC) and demodulate the received signal using a demodulator. The receiver may perform synchronization and equalization on the received signal using channel synchronization and equalizer (EQ), and decode the received signal using a channel decoder. The decoded signal is parsed by a layer 1 (LI) signaling parser, and thus the receiver may acquire L1 signaling information. The L1 signaling information may be delivered to a baseband controller of the receiver and used to acquire physical layer data. In addition, the L1 signaling information may be input to the signaling controller of the receiver. In addition, the decoded signal may be input to a link layer interface and parsed by an L2 signaling parser, and the L2 signaling information may be input to the signaling controller. The signaling controller may communicate with a service signaling channel (ssc) processing buffer and a parser to update a service MAP database (DB). In addition, a service guide (SG) processor may update the service guide DB. The receiver may restore a packet header according to the signaling information input to the signaling controller and receive an IP packet using an IP packet filter. In addition, the network switch of the receiver may receive the IP packet through wired or wireless communication, using a TCP/IP stack. The received IP packet is input to the A/V service controller via the common protocol stack. The demultiplexer of the receiver may demultiplex audio data and video data. The receiver may output audio data using an audio decoder and an audio renderer, and output video data using a video decoder and a video renderer.

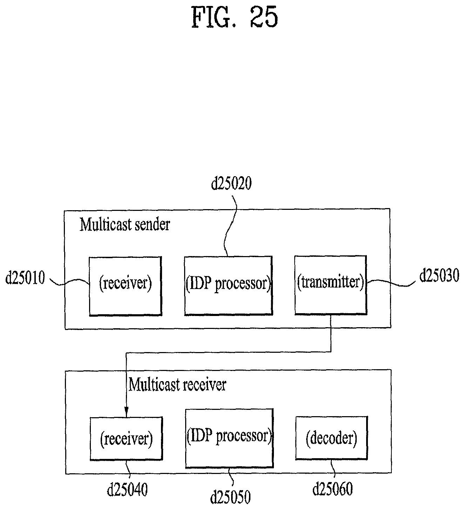

FIG. 25 is a diagram illustrating a multicast sender and a multicast receiver according to an embodiment of the present invention. The multicast sender may include a receiver d25010, an IDP processor d25020, and a transmitter d25030. The receiver d25010 may receive content data for multicast from a content server. The multicast sender may use a multicast delivery protocol to multicast the received content. As described above, the multicast delivery protocol may be one of FLUTE, ROUTE, NORM, QUIC, and RTP. The multicast sender may generate an IDP packet, which is an intermediate delivery packet including a packet generated according to the multicast delivery protocol as a payload. The IDP processor d25020 may include the multicast delivery protocol packet in the IDP payload, which is the payload of the IDP packet, and generate an IDP header, which is the header of the IDP packet. Information included in the IDP header is described in FIG. 22. Information on the multicast delivery protocol used for the payload included in the IDP packet may be transmitted through the IDP header. The transmitter may transmit the generated IDP packet using a lower protocol including IP/UDP.

The multicast receiver may include a receiver d25040, an IDP processor d25050, and a decoder d25060. The receiver d25040 may receive multicast data from the multicast sender. The received multicast data may be parsed by the IDP processor d25050. The IDP processor may parse an IDP packet, and thus may identify the multicast delivery protocol used for the data included in the IDP packet payload. Details of the information included in the IDP packet header have been described with reference to FIG. 22. The multicast receiver may acquire media content data through the identified multicast delivery protocol, and decode the same using a decoder.

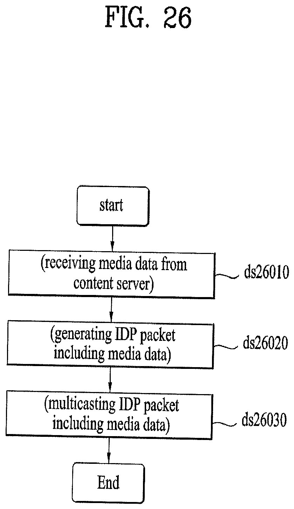

FIG. 26 illustrates a multicast transmission method for a multicast sender according to an embodiment of the present invention. The multicast transmission method may include receiving media data from a content server (ds26010), generating an intermediate delivery protocol packet including media data (ds26020), and multicasting the intermediate delivery protocol packet including media data (ds26030). The receiving of the media data from the content server (ds26010) may include receiving the media data for multicast from the content server. The multicast transmission method may use a multicast delivery protocol to multicast the received content. As described above, one of FLUTE, ROUTE, NORM, QUIC, and RTP may be used as the multicast delivery protocol. Using the multicast transmission method, an IDP packet may be generated, which is an intermediate delivery packet including a packet generated according to the multicast delivery protocol as a payload. The generating of the IDP packet including the media data (ds26020) may include including a multicast delivery protocol packet in the IDP payload, which is the payload of the IDP packet, and generating an IDP header, which is the header of the IDP packet. Information included in the IDP header is described with reference to FIG. 22, and information on the multicast delivery protocol used for the payload included in the IDP packet may be transmitted through the IDP header. The multicasting of the IDP packet including data (ds26030) may include transmitting the generated IDP packet using a lower protocol including IP/UDP.

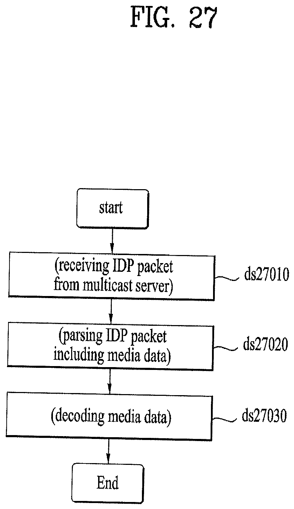

FIG. 27 illustrates a multicast reception method for a multicast receiver according to an embodiment of the present invention. The multicast reception method may include receiving an intermediate delivery protocol (IDP) packet from a multicast server (ds27010), parsing the intermediate delivery protocol packet including media data (ds27020), and decoding the media data (ds27030). In the multicast reception method, the receiving of the IDP packet from the multicast server (ds27010) may include receiving the IDP packet including multicast data from the multicast sender. The received IDP packet may be parsed (ds27020). Thereby, the multicast receiver may identify a multicast delivery protocol used for the data contained in the IDP packet payload. Details of the information included in the IDP packet header have been described with reference to FIG. 22. The multicast receiver may acquire media content data through the identified multicast delivery protocol, and may decode the data using a decoder (ds27030).

Although the description of the present invention is explained with reference to each of the accompanying drawings for clarity, it is possible to design new embodiments by merging the embodiments shown in the accompanying drawings with each other. If a recording medium readable by a computer, in which programs for executing the embodiments mentioned in the foregoing description are recorded, is designed by those skilled in the art, it may fall within the scope of the appended claims and their equivalents.

The devices and methods according to the present invention may be non-limited by the configurations and methods of the embodiments mentioned in the foregoing description. The embodiments mentioned in the foregoing description may be configured in a manner of being selectively combined with one another entirely or in part to enable various modifications.

In addition, the image processing method according to the present invention may be implemented with processor-readable code in a processor-readable recording medium provided to a network device. The processor-readable medium may include all kinds of recording devices capable of storing data readable by a processor. The processor-readable medium may include one of ROM, RAM, CD-ROM, magnetic tapes, floppy disks, optical data storage devices, and the like and also include carrier-wave type implementation such as a transmission via Internet. Furthermore, as the processor-readable recording medium is distributed to a computer system connected via a network, processor-readable code may be saved and executed in a distributed manner.

Although the invention has been described with reference to the exemplary embodiments, those skilled in the art will appreciate that various modifications and variations can be made in the present invention without departing from the spirit or scope of the invention described in the appended claims. Such modifications are not to be understood individually from the technical idea or viewpoint of the present invention

Both apparatus and method inventions are described in this specification and descriptions of both the apparatus and method inventions are complementarily applicable, if necessary.

### [Mode for Invention]

Various embodiments have been described in the best mode for carrying out the invention.

### [Industrial Applicability]

The present invention is usable and repeatable in the field of broadcast and video signal processing.

## Claims

1. A multicast transmission method comprising:
receiving media content;
packetizing the received media content using a multicast delivery protocol;
encapsulating the packetized media content into an intermediate delivery protocol (IDP) packet; and
transmitting the IDP packet.

2. The multicast transmission method of claim 1, wherein the multicast delivery protocol is one of File Delivery over Unidirectional Transport (FLUTE), Real-Time Object Delivery over Unidirectional Transport (ROUTE), NACK-Oriented Reliable Multicast (NORM), Quick UDP Internet Connections (QUIC), Real Time Protocol (RTP) or Common Mezzanine Distribution Format (CMZF).

3. The multicast transmission method of claim 1, wherein the IDP packet comprises a header and a payload,
wherein the header of the IDP packet contains information for identifying the multicast delivery protocol.

4. The multicast transmission method of claim 1, wherein the IDP packet comprises a header and a payload,
wherein the header of the IDP packet contains information for identifying a type of a data stream included in the payload of the IDP packet.

5. The multicast transmission method of claim 4, wherein the information for identifying the type of the data stream indicates one of streaming, repair, control message, signaling, or report.

6. The multicast transmission method of claim 1, wherein the IDP packet comprises a header and a payload,
wherein the header of the IDP packet contains link information,
wherein the link information indicates whether a link used to transmit the IDP packet is a multicast link, a tunneling link, or a signaling link.

7. A multicast transmission apparatus comprising:
a receiver configured to receive media content;
a packetizer configured to packetize the received media content using a multicast delivery protocol;
an intermediate delivery protocol (IDP) processor configured to encapsulate the packetized media content into an IDP packet; and
a transmitter configured to transmit the IDP packet.

8. The multicast transmission apparatus of claim 7, wherein the multicast delivery protocol is one of File Delivery over Unidirectional Transport (FLUTE), Real-Time Object Delivery over Unidirectional Transport (ROUTE), NACK-Oriented Reliable Multicast (NORM), Quick UDP Internet Connections (QUIC), Real Time Protocol (RTP) or Common Mezzanine Distribution Format (CMZF).

9. The multicast transmission apparatus of claim 7, wherein the IDP packet comprises a header and a payload,
wherein the header of the IDP packet contains information for identifying the multicast delivery protocol.

10. The multicast transmission apparatus of claim 7, wherein the IDP packet comprises a header and a payload,
wherein the header of the IDP packet contains information for identifying a type of a data stream included in the payload of the IDP packet.

11. The multicast transmission apparatus of claim 10, wherein the information for identifying the type of the data stream indicates one of streaming, repair, control message, signaling, or report.

12. The multicast transmission apparatus of claim 7, wherein the IDP packet comprises a header and a payload,
wherein the header of the IDP packet contains link information,
wherein the link information indicates whether a link used to transmit the IDP packet is a multicast link, a tunneling link, or a signaling link.

13. A multicast reception method comprising:
receiving an intermediate delivery protocol (IDP) packet from a multicast sender;
parsing the received IDP packet, the IDP packet comprising a multicast delivery protocol packet as a payload; and
decoding media data contained in the IDP packet.

14. A multicast reception apparatus comprising:
a receiver configured to receive an intermediate delivery protocol (IDP) packet from a multicast sender;
an IDP processor configured to parse the received IDP packet, the IDP packet comprising a multicast delivery protocol packet as a payload; and
a decoder configured to decode media data contained in the IDP packet.
